# EUROPÄISCHE PATENTSCHRIFT

(11) **EP 0 548 131 B1**
(45) Veröffentlichungstag und Bekanntmachung des Hinweises auf die Patenterteilung: **27.11.1996**
(21) Anmeldenummer: 91915788.3
(22) Anmeldetag: 06.09.1991
(51) Int. Cl.: H04N 11/04, H04N 9/79

(54) **VERFAHREN, CODER UND DECODER ZUR DIGITALEN ÜBERTRAGUNG UND/ODER AUFZEICHNUNG VON KOMPONENTENCODIERTEN FARBFERNSEHSIGNALEN**
PROCESS, CODER AND DECODER FOR DIGITAL TRANSMISSION AND/OR RECORDING OF COMPONENT-CODED COLOUR-TV SIGNALS
PROCEDE, CODEUR ET DECODEUR DE TRANSMISSION ET/OU D'ENREGISTREMENT NUMERIQUES DE SIGNAUX DE TELEVISION EN COULEURS A COMPOSANTES CODEES

(30) Priorität: 10.09.1990 DE 4028731
(43) Veröffentlichungstag der Anmeldung: 30.06.1993
(73) Patentinhaber: Deutsche Thomson-Brandt GmbH, 78003 Villingen-Schwenningen (DE)
(72) Erfinder: SCHWEIDLER, Siegfried, D-3008 Garbsen 4 (DE); KEESEN, Heinz-Werner, D-3000 Hannover 1 (DE)
(74) Vertreter: Hartnack, Wolfgang, Dipl.-Ing.
(86) Internationale Anmeldenummer: EP9101701
(87) Internationale Veröffentlichungsnummer: WO9204804

(56) Entgegenhaltungen:
- GB-A- 2 169 468
- US-A- 4 703 352
- Better Video Images, herausgegeben von Jeffrey Friedman, 23rd Annual SMPTE Television Conference in San Francisco, CA, 3.-4. Februar 1989, J. Chatel: Compatible hierarchy of studio standards," pages 240-253, see figure 2; tables 1-2; page 246, paragraph 5; pages 242-243, point 22; page 245;paragraph 1

## Beschreibung

### Stand der Technik

Der Artikel von J. Chatel, "Compatible hierarchy of studio standards", Better Video Images, 23rd Annual SMPTE Television Conference in San Francisco, 3.-4. Februar 1989, Seiten 240-253, offenbart ein Verfahren zur digitalen Übertragung und/oder Aufzeichnung von komponentencodierten Farbfernsehsignalen, die zeilenorientiert sind, bei dem für einen Übergang von einem ersten Bild-Seiten-Verhältnis zu einem zweiten Bild-Seiten-Verhältnis zumindest ein Teil einer zusätzlich benötigten Übertragungs- und/oder Aufzeichnungskapazität für die Codierung der zusätzlich entstehenden Fläche von Bildern mit dem zweiten Bild-Seiten-Verhältnis durch Unterabtastung von Komponenten gewonnen wird.
In dem Artikel "Digitales Video", Funkschau Nr. 19/1986, werden Eigenschaften eines digitalen 'D1'-Videorecorders mit seinen Schnittstellen beschrieben. Das Spurbild von D1-Videorecordern ist genormt, ebenso die der Schnittstellen in der CCIR-Norm 601, "Digitaler Schnittstellenstandard".
Ein solcher D1-Videorecorder kann ein YUV-Komponentensignal aufzeichnen mit Abtastfrequenzen von 13.5 MHz für Y und 6.75 MHz für U und für V. Die Amplitudenauflösung der Bildpunkt-Werte der Komponentensignale beträgt 8 Bit und es kann ein Fernsehsignal mit 625-Zeilen, Halbbildern (interlace) und 4:3-Bildformat aufgezeichnet werden.
Obwohl sich mit solchen D1-Videorecordern im Vergleich zu Heim-Videorecordern eine gute Bildqualität aufzeichnen und wiedergeben läßt, sind die Nachteile des Interlace-Verfahrens, z.B. Zwischenzeilenflimmern und Kantenflackern, noch nicht beseitigt. Außerdem sind D1-Videorecorder nicht für Aufzeichnungen im 16:9-Bildformat vorgesehen.

### Erfindung

Der Erfindung liegt die Aufgabe zugrunde, ein Verfahren zur digitalen Übertragung und/oder Aufzeichnung von komponentencodierten progressiven Farbfernsehbildern mit 16:9-Bildformat anzugeben, wobei die Übertragung und/oder die Aufzeichnung ursprünglich für komponentencodierte Halbbilder mit 4:3-Bildformat vorgesehen ist. Diese Aufgabe wird durch das in Anspruch 1 angegebene erfindungsgemäße Verfahren gelöst.

Die Chrominanzkomponenten U und V werden vertikal unterabgetastet. Die freiwerdende Übertragungs- und/oder Speicherkapazität wird dazu verwendet, die gegenüber einem 4:3-Bildformat zusätzliche Bildfläche des 16:9-Bildformats darzustellen.
Zusätzlich können die Komponentensignale blockkompandiert werden, wobei die zur Codierung benötigte Datenrate um einen Faktor kleiner drei, insbesondere zwei, reduziert wird.
Das Prinzip einer Blockkompandierung ist in der Dissertation "Die Blockkompandierung digitaler Fernsehsignale", H. W. Keesen, Rheinisch-Westfäliche Technische Hochschule Aachen, 1984, dargelegt. Dazu werden zweidimensionale Blöcke von Bildpunkten (Xi, i=1...N) gebildet. Der kleinste Amplitudenbetrag innerhalb des Blocks wird ermittelt und stellt das Minimum M dar. Außerdem wird die Differenz zwischen dem kleinsten und dem größten Amplitudenbetrag innerhalb des Blocks, die Aktivität A, gebildet. Minimum M und Aktivität A werden dann quantisiert (Mq, Aq), das quantisierte Minimum wird von den Werten der Bildpunkte subtrahiert (Xi-Mq=Di) und diese Bildpunkt-Differenzwerte Di werden anschließend quantisiert (Dqi).
Mq, Aq und Dqi werden codiert und übertragen bzw. aufgezeichnet. Vorteilhaft wird durch dieses Verfahren der maximale Quantisierungsfehler begrenzt und die größeren Quantisierungsfehler treten nur in Blöcken mit größerer Aktivität auf, wo sie für einen Betrachter gut maskiert werden.
Durch eine spezielle Form der Codierung können mit Hilfe eines relativ geringen Schaltungsaufwandes diese Signale Mq, Aq und Dqi gebildet und auf einem D1-Videorecorder aufgezeichnet bzw. übertragen werden. Das Datenformat eines eines in dieser Art codierten Blocks entspricht dabei vorteilhaft einem Datenformat, wie es für Halbbilder im 4:3-Bildformat bekannt ist.

Im Prinzip besteht das erfindungsgemäße Verfahren darin, daß bei einem Übergang von einem ersten Bild-Seiten-Verhältnis zu einem zweiten Bild-Seiten-Verhältnis zumindest ein Teil einer zusätzlich benötigten Übertragungs- und/oder Aufzeichnungskapazität für die Codierung der zusätzlich entstehenden Fläche von Bildern mit dem zweiten Bild-Seiten-Verhältnis durch vertikale Unterabtastung einer oder mehrerer Chrominanzkomponenten gewonnen wird. Die Farbfernsehsignale können zeilenweise übertragen und/oder aufgezeichnet werden, wobei in den Zeilen oder Zeilenabschnitten, die gemäß bekannten Anordnungen von Übertragungs- und/oder Speicherplätzen die Chrominanzkomponente/n enthalten, aus der Luminanzkomponente gewonnene Daten anstelle von Chrominanzdaten angeordnet werden.
Dabei können innerhalb von Zeilenpaaren jeweils in einem ersten Abschnitt (Y) der beiden Zeilen Luminanzdaten angeordnet werden und in einem zweiten Abschnitt (U) der ersten der beiden Zeilen Daten einer ersten Chrominanzkomponente und in einem zweiten Abschnitt (V) der zweiten der beiden Zeilen Daten einer zweiten Chrominanzkomponente.
Die Übertragung bzw. Aufzeichnung des codierten Farbfernsehsignals im zweiten Bild-Seiten-Verhältnis kann über eine Übertragungsstrecke bzw. mit einer Einrichtung erfolgen, die für das erste Bild-Seiten-Verhältnis vorgesehen ist.

Vorteilhafte Weiterbildungen des erfindungsgemäßen Verfahrens ergeben sich aus den zugehörigen abhängigen Ansprüchen.

In Anspruch 12 ist ein Coder für das Verfahren nach Anspruch 3 angegeben.
Im Prinzip ist dieser Coder versehen mit einem Maximumbildner, mit einem Minimumbildner, mit einem ersten Subtrahierer, der die Ausgangssignale des Minimumbildners von den Ausgangssignalen des Maximumbildners abzieht, mit einem ersten Quantisierer für die Ausgangssignale des ersten Subtrahierers, mit einem zweiten Quantisierer für die Ausgangssignale des Minimumbildners, mit einem zweiten Subtrahierer, der die Ausgangssignale des zweiten Quantisierers von Bildpunkt-Werten abzieht, mit einem dritten Quantisierer für die Ausgangssignale des zweiten Subtrahierers und mit einer Codierschaltung, die die Ausgangssignale des ersten, zweiten und dritten Quantisierers zu einem Block mit einem bekannten Codierformat umformt.

In Anspruch 13 ist ein Decoder für das Verfahren nach Anspruch 3 angegeben.
Im Prinzip ist dieser Decoder versehen mit einer Einrichtung zur Ermittlung einer maximalen und einer minimalen Amplitudenstufe quantisierter Bildpunkt-Differenzwerte, mit Mitteln zur Auswertung einer Differenzzahl zwischen diesen Amplitudenstufen, mit Mitteln zur Auswertung der minimalen Amplitudenstufe, mit Mitteln zur Rück-Quantisierung von quantisierter Aktivität, quantisiertem Minimum und quantisierten Bildpunkt-Differenzwerten, und mit Addierern, die das Minimum und die Bildpunkt-Differenzwerte summieren.

### Zeichnungen

Anhand der Zeichnungen werden Ausführungsbeispiele der Erfindung beschrieben. Die Zeichnungen zeigen in:
- Fig. 1: Prinzip der Block-Kompandierung;
- Fig. 2: Blockschaltbild eines erfindungsgemäßen Coders;
- Fig. 3: Anordnung von Komponentensignal-Bildpunkt-Werten innerhalb von Zeilen;
- Fig. 4: Anordnung von Daten innerhalb des Datenformats eines codierten Blocks;
- Fig. 5: Blockschaltbild eines erfindungsgemäßen Decoders.

### Ausführungsbeispiele

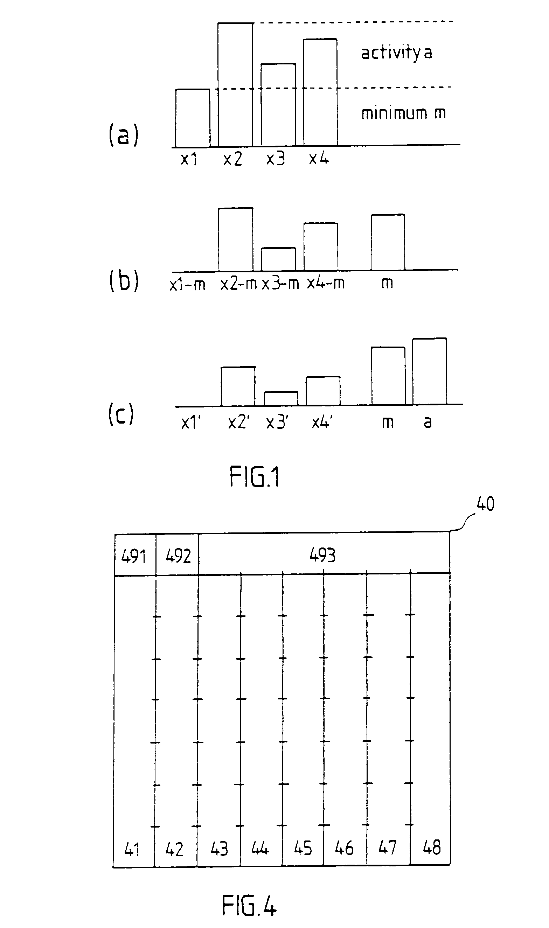

Fig. 1 erläutert ein bekanntes Verfahren der Blockkompandierung. In Fig. 1a sind die Werte von vier Bildpunkten x1, x2, x3, x4 eines 2*2-Bildpunkt-Blocks dargestellt. Dabei bildet x1 das Minimum m dieses Blocks.
In Fig. 1b ist m von den vier Bildpunkt-Werten subtrahiert und es ergeben sich die vier Bildpunkt-Differenzwerte x1-m, x2-m, x3-m und x4-m. Dabei ist x1-m = 0, weil keine Quantisierung erfolgte. Die Differenz zwischen dem maximalen Bildpunkt-Wert und dem Minimum m ist in diesem Fall x2-m. Diese Differenz stellt die Aktivität a des Blocks dar.
In Fig. 1c sind die Differenzwerte x1-m, x2-m, x3-m und x4-m durch a dividiert, wobei sich die Werte x1', x2', x3' und x4' ergeben.

In Fig. 2 ist ein Blockschaltbild eines Coders mit Block-kompandierung dargestellt. Einem Eingang 20 wird beispielsweise die Y-Komponente zugeführt und in einem A/D-Wandler 21 in ein serielles digitales Signal umgewandelt. In einem Line-to-Block-Wandler 22 werden daraus jeweils Blöcke von z.B. 4*4 Bildpunkt-Werten geformt. Der Line-to-Block-Wandler 22 kann in diesem Fall drei oder vier Zeilenspeicher enthalten. Das Ausgangssignal des Line-to-Block-Wandlers 22 wird einem Maximumbildner 231, einem Minimumbildner 232 und zum Laufzeitausgleich einer Verzögerungsschaltunq 233 zugeführt. Der im Minimumbildner 232 ermittelte kleinste Bildpunkt-Wert des jeweiligen Blocks wird in einem ersten Subtrahierer 251 von dem größten Bildpunkt-Wert des jeweiligen Blocks abgezogen und stellt die Aktivität der Y-Komponente dieses Blocks dar. Der Aktivitäts-Wert wird in einen ersten Quantisierer 241 und das Minimum in einen zweiten Quantisierer 242 quantisiert, wobei der zweite Quantisierer 242 von einem Ausgangssignal des ersten Quantisierers 241 gesteuert wird. Das quantisierte Minimum des Blocks wird in einem zweiten Subtrahierer von jedem der Bildpunkt-Werte des Blocks abgezogen. Die sich daraus ergebenden Bildpunkt-Differenzwerte gelangen zu einem dritten Quantisierer 243, der ebenfalls von dem Ausgangssignal des ersten Quantisierers 241 gesteuert wird. Der dritte Quantisierer 243 kann z.B. 11 Stufen haben.

Die quantisierten Bildpunkt-Differenzwerte, das quantisierte Minimum und die quantisierte Aktivität werden dann in einer Codierschaltung 28 zu einem Datenformat entsprechend Fig. 4 umgeformt.
Entsprechendes gilt für die blockkompandierten U- und V-Komponenten (Aktivität, Minimum, Bildpunkt-Differenzwerte), die über Eingänge 26 bzw. Eingänge 27 ebenfalls der Codierschaltung 28 zugeführt werden.
Am Ausgang der Codierschaltung werden seriell die blockkompandierten und umformatierten YUV-Komponenten ausgegeben. Diesen Signalen können noch Fehlerschutzsignale hinzugefügt werden, bevor sie übertragen bzw. aufgezeichnet werden.

In Fig. 3 ist dargestellt, in welcher Reihenfolge die Komponentensignale auf einem D1-Videorecorder aufgezeichnet werden.
Fig. 3a zeigt eine bekannte Anordnung für den aktiven Teil einer Zeile eines aufgezeichneten Farbfernsehsignals. Die YUV-Komponentensignale werden jeweils zeilenweise seriell in der Reihenfolge U12, Y1, V12, Y2, U34, Y3, V34, Y4,... angeordnet, wobei Y1, Y2, Y3,... Y-Bildpunkt-Werte für die Bildpunkte der Zeile sind und U12, V12, U34,... die dazugehörigen U- und V-Bildpunkt-Werte. Y1 und Y2 haben jeweils einen gemeinsamen U- und V-Bildpunkt-Wert U12 und V12.
Jede Zeile enthält dabei 720 Y-, 360 U- und 360 V-Bildpunkt-Werte mit jeweils 8 Bit. Eine Zeile enthält somit 1440 Byte, die in 180 Blöcke zu jeweils 8 Byte aufgeteilt werden. Dabei werden die Werte 0 und 255 aus dem mit 8 Bit darstellbaren Bereich 0...255 nicht für die Bildpunkt-Werte der YUV-Komponenten verwendet.
Ein Halbbild mit 288 aktiven Zeilen enthält somit 720*288 = 207360 Y-Bildpunkt-Werte und jeweils 360*288 = 103680 U-bzw. V-Bildpunkt-Werte, insgesamt also 414720 YUV-Bildpunkt-Werte. Dies gilt für ein 4:3-Bildformat.
Für ein Vollbild im Format 16:9 mit gleicher örtlicher Y-Horizontalauflösung werden 2*207360*(16/9)/(4/3) = 552960 Y-Bildpunkt-Werte benötigt. Im D1-Videorecorder haben die U-und V-Komponenten in horizontaler Richtung die halbe Auflösung der Y-Komponente und in vertikaler Richtung die volle Auflösung der Y-Komponente.
Nach einer Empfehlung des CCIR sollte die Auflösung in vertikaler und horizontaler Richtung annähernd gleich sein.
Wenn man nun für die UV-Komponenten die Auflösungen in beiden Richtungen angleichen will, kann man diese Komponenten in vertikaler Richtung mit dem Faktor zwei unterabtasten.
Damit werden für die U- und V-Komponente pro Vollbild im 16:9-Format jeweils 288*360*(16/9)/(4/3) = 138240 Bildpunkt-Werte benötigt, insgesamt 2*138240 = 276480.
Für ein Vollbild mit progressivem 16:9-Bildformat und vertikal unterabgetasteten Farbkomponenten ergibt sich so eine Gesamtzahl von 552960+276480 = 829440 Bildpunkt-Werten zu je 8 Bit. Um solche Vollbilder auf einem D1-Videorecorder aufzeichnen zu können, muß eine Datenkompression um den Faktor 829440/414720 = 2 durchgeführt werden. Dies wird beispielsweise durch die für Fig. 2 beschriebene Blockkompandierung erreicht. Vorteilhaft bleibt wegen des relativ geringen Kompressionsfaktors und wegen dieser speziellen Art der Datenreduktion eine hohe Bildqualität erhalten.
In Fig. 3b und Fig. 3c ist eine mögliche Verteilung der Bildpunkt-Werte für das progressive 16:9-Bildformat innerhalb von zwei aufeinanderfolgenden Zeilen dargestellt. Jede Zeile kann 960 Y-Bildpunkt-Werte und 480 Chrominanz-Bildpunkt-Werte enthalten. Es kann auch die Zeile in Fig. 3b die V-Komponente enthalten und die Zeile in Fig. 3c die U-Komponente. Die Verteilung innerhalb der Zeilen wird dabei vorteilhaft für ein bekanntes oder prinzipiell ähnliches Fehlerkorrekturverfahren (Interleaving, Shuffling, Concealment) angepaßt.

In Fig. 4 wird dargestellt, wie ein Block von acht YUV-Bildpunkt-Werten eines D1-Videorecorders mit acht Byte (= 8*8 Bit) ausgenutzt werden kann, um darin sechzehn blocckompandierte und quantisierte Bildpunkt-Differenzwerte Dqi, beispielsweise der Y-Komponente, eines 4*4-Bildpunktblocks mit dem zugehörigen quantisierten Minimum Mq und der zugehörigen quantisierten Aktivität Aq aufzuzeichnen bzw. zu übertragen. In den acht Feldern 41 bis 48 zu jeweils 7 Bit werden jeweils zwei quantisierte Bildpunkt-Differenzwerte Dqi, Dqi+1 angeordnet. Mit Hilfe der beiden Felder 491 und 492 wird die quantisierte Aktivität Aq codiert und mit Hilfe des Feldes 493 mit 6 Bit das quantisierte Minimum Mq. Dabei werden die Abhängigkeiten der Größen untereinander vorteilhaft ausgenutzt. Durch die spezielle Art der Codierung wird erreicht, daß sich bei kleinen Aktivitäten auch nur vernachlässigbare Decodierfehler ergeben. Etwas größere Decodierfehler treten nur bei größeren Aktivitäten (d.h. detailreichen Bildteilen) auf, wo sie für einen Betrachter maskiert werden.
Die Bildpunkt-Differenzwerte Di werden im dritten Quantisierer 243 in Fig. 2 mit elf Stufen S0,...,S10, in Abhängigkeit von der Aktivität quantisiert. Weil jeweils zwei Bildpunkt-Differenzwerte zusammengefaßt werden, ergeben sich 11*11 = 121 vorkommende Datenwerte. Diese lassen sich jeweils mit 7 Bit darstellen und werden in den Feldern 41 bis 48 angeordnet.
Weil die Summe von Aktivität A und Minimum M im Bereich von 0...255 liegen muß (8 Bit-Auflösung) können bei großen Werten von A nur kleine Werte von M vorkommen. Durch die spezielle Codierung kann die quantisierte Aktivität Aq mit zwei Bit und das quantisierte Minimum Mq mit sechs Bit eindeutig dargestellt werden.
Die 11 Stufen S0,...,S10 und mögliche Repräsentativwerte Ari für die quantisierte Aktivität Aq ergeben sich z.B. aus folgenden Bereichen für A:

| A | Stufe | Ari | | | |
|---|---|---|---|---|---|
| 0 | S0 | 0 | | | |
| 1 | S1 | 1 | | | |
| 2 und 4 | S2 | 2, | 3 | | |
| 3 und 5... 7 | S3 | 3, | 4, | 7 | |
| 8... 17 | S4 | 9, | 11, | 13, | 15 |
| 18... 29 | S5 | 18, | 22, | 24, | 27 |
| 30... 48 | S6 | 32, | 35, | 39, | 45 |
| 49... 79 | S7 | 52, | 60, | 67, | 75 |
| 80...121 | S8 | 85, | 93, | 102, | 114 |
| 122...179 | S9 | 127, | 142, | 156, | 171 |
| 180...255 | S10 | 189, | 204, | 225, | 247 |

Liegt die Aktivität A z.B. im Bereich 180...255, liegt Stufe S10 vor und durch die Quantisierung von A ergeben sich die Repräsentativwerte Ari 189, 204, 225 oder 247. Wenn die Aktivität A kleiner als 180 ist, kann demzufolge höchstens Stufe S9 vorliegen. Der Aktivitätsbereich für Stufe S10 und die folgenden Stufen S9, S8, S7, ... wird jeweils in vier Aktivitätsklassen mit den entsprechenden Repräsentativwerten eingeteilt. In Codierschaltung 28 werden die vier Aktivitätsklassen innerhalb einer Stufe mit den zwei Bit der Felder 491 und 492 codiert. Dann läßt sich z.B. aus der Summe des niedrigsten Repräsentativwerts 189 in Stufe S10 und den sechs Bit für das Minimum in Feld 493 ein maximaler Bildpunkt-Wert von 189+63 = 252 darstellen. Dies reicht aus, weil die Bildpunkt-Werte 0 und 255 nicht codiert werden sollen.
Innerhalb eines jeden Blocks nach Fig. 4 kann die Differenz zwischen der größten vorkommenden Stufen-Nummer und der kleinsten vorkommenden Stufen-Nummer ermittelt werden. Entsprechend dieser Differenz wird festgelegt, wie die beiden Bits für die quantisierte Aktivität Aq in den Feldern 491 und 492 in einem Decoder zu interpretieren sind. Hat beispielsweise diese Stufen-Differenz den Wert zehn (d.h. die quantisierten Bildpunkt-Differenzwerte Dqi besetzen mindestens den kleinsten und den größten der möglichen Ausgangswerte des dritten Quantisierers 243 in Fig. 2), kann nur ein Stufe S10 entsprechender Aktivitätsbereich vorliegen. Mit den beiden Bits in den Feldern 491 und 492 können dann eindeutig die vier Repräsentativwerte 247, 225, 204 oder 189 codiert werden.
Ist der Stufen-Differenzwert z.B. 7, kann nur ein Stufe S7 entsprechender Aktivitätsbereich mit den Repräsentativwerten 75, 67, 60 oder 52 für die quantisierte Aktivität vorliegen. Mit den beiden Bits in den Feldern 491 und 492 können dann ebenfalls eindeutig diese vier Repräsentativwerte Ari codiert werden.

Bei kleineren Aktivitäten reichen die das quantisierte Minimum Mq darstellenden sechs Bit (0...63 ist damit darstellbar) in Feld 493 nicht mehr aus, um damit einen über 63 liegenden Wert für Mq zu codieren. Mit Hilfe der besetzten Stufen-Nummern innerhalb der Felder 41 bis 48 kann eine Zusatzinformation zur Codierung des quantisierten Minimums Mq übertragen bzw. aufgezeichnet werden, weil durch das Subtrahieren von Mq von den Bildpunktwerten naturgemäß in jedem Block immer Stufe S0 besetzt wäre.
Sind beispielsweise die besetzten Stufen-Nummern 0, 3, 4, 9, 1, 5,... und Stufe 9 ist die größte in diesem Block, kann ein minimaler Repräsentativwert von 127 vorliegen und für das Minimum ein Wert zwischen 1 und 254-127 = 127 erforderlich sein. In Codierschaltung 28 wird nun der Wert eins zu den Stufen-Nummern hinzuaddiert, wenn das Minimum in Bereich 64...127 liegt und es ergeben sich die neuen Zahlenwerte 1, 4, 5, 10, 2, 5,... .
Ein Decoder kann erkennen, daß die Stufe S0 nicht besetzt ist. Darum wird in diesem Fall zu dem mit 6 Bit codierten quantisierten Minimum Mq einmal der Wert 64 hinzuaddiert. Falls vor der Codierung Mq im Bereich 0...63 gelegen hätte, wären in der Codierschaltung 28 die Stufen-Nummern unverändert geblieben.
Ergibt sich aus dem Aktivitätsbereich die Stufe S8, kann in Codierschaltung 28 entweder eine 0, 1 oder 2 zu den Stufen-Nummern addiert werden und bei Stufe 7 oder kleineren Stufen entweder eine 0, 1, 2 oder 3. Dabei entspricht dem Wert zwei eine Addition von 2*64 und dem Wert drei eine Addition von 3*64 zum quantisierten Minimum. Damit kann Mq unter Berücksichtigung der jeweiligen Aktivität innerhalb des gesamten Bereichs 0...255 codiert werden.

Um innerhalb eines gesamten Blocks entsprechend Fig. 4 die von einem D1-Videorecorder nicht aufzeichenbaren Werte 0 und 255 zu unterdrücken, wird zu den als Zahlen aus dem Dualsystem interpretierbaren Feldern 41-48 mit dem darüberliegenden Bit aus den Feldern 491, 492 oder 493 im Coder jeweils z.B. der Wert eins am Ausgang der Codierschaltung 28 addiert und am Eingang eines Decoders entsprechend subtrahiert. Weil die sieben Bit aus den Feldern 41...48 jeweils nur einen Zahlenbereich von 11*11 = 121 Werten (statt eines Zahlenbereichs von 128 Werten) belegen, ist dieses möglich.
Bei den kleinsten Aktivitätsklassen sind nicht mehr jeweils vier Repräsentativwerte Ari erforderlich. Aufgrund dieser Tatsache lassen sich durch entsprechende Maßnahmen zusätzliche Daten innerhalb der Blöcke übertragen bzw. aufzeichnen. Wenn die Stufen-Nummer kleiner als 9 ist, können Aktivität und Minimum zusätzlich kombiniert codiert werden. Z.B. kann bei Stufe S7 das quantisierte Minimum mit 8 Bit codiert werden, wobei dann fünf verschiedene Aktivitätsbereiche mit sieben Stufen möglich sind.

Ebenso muß auch im gesamten Aktivitäts- bzw. Minimumbereich die Aufteilung für die Aktivitätscodierung mit den Feldern 491 und 492 und für das Minimum mit dem Feld 493 nicht fest sein. Weil Minimum und Aktivität kleiner/gleich 255 sind, kann auch z.B. folgende Codierung gewählt werden:
Für Aq = 250 ist Mq < 6; für Aq = 230 ist Mq < 26.

| Aq | Mq | Codewort in den Feldern 491 bis 493 |
|---|---|---|
| 250 | 0 | 0000 0000 |
| 250 | 1 | 0000 0001 |
| . | . | . |
| 250 | 5 | 0000 0101 |
| 230 | 0 | 0000 0110 |
| 230 | 1 | 0000 0111 |
| . | . | . |

usw. Die jeweiligen Codewörter werden dabei fortlaufend binär hochgezählt. Dadurch werden alle zur Verfügung stehenden, möglichen Codewörter ausgenutzt.

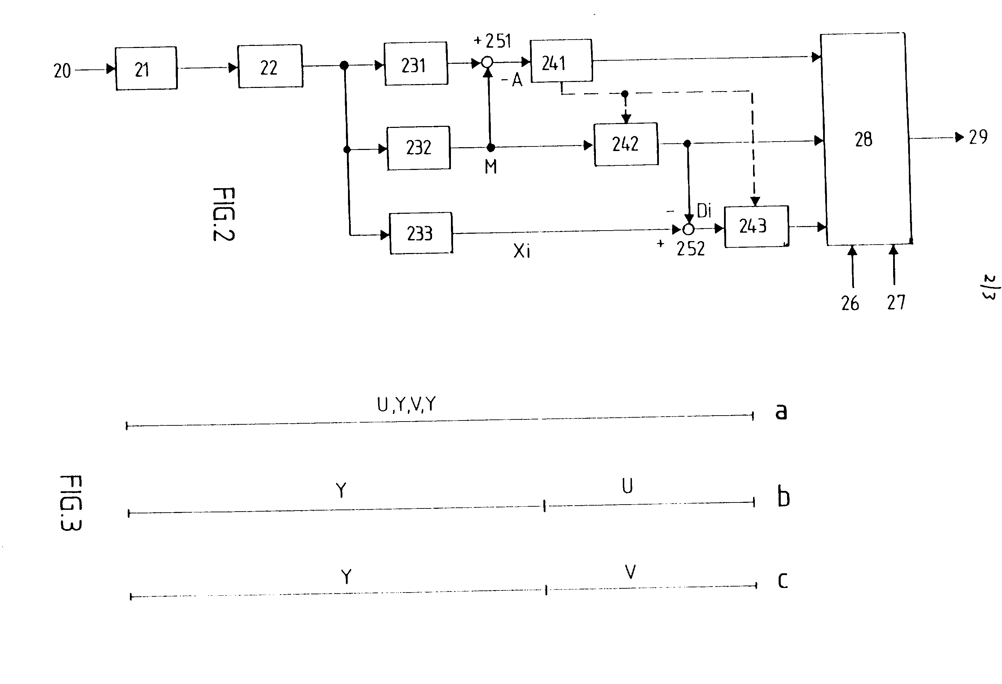

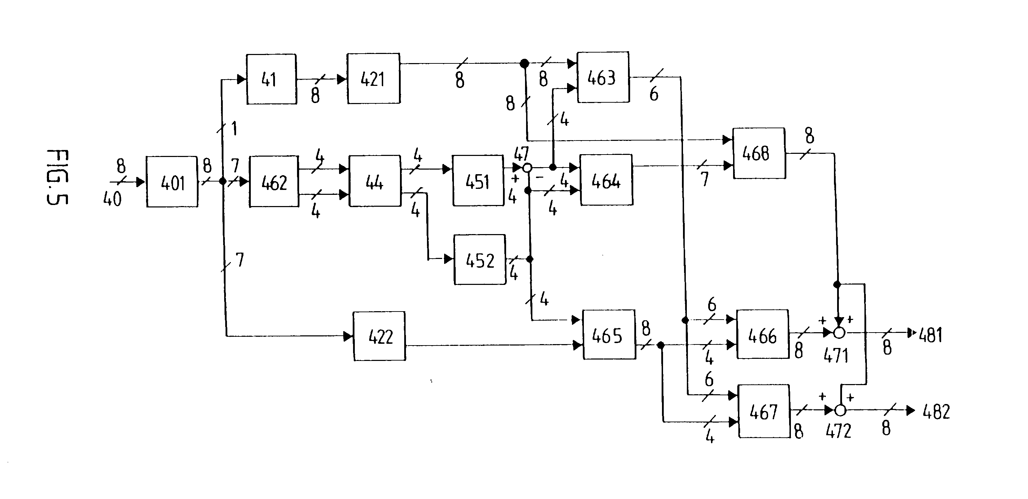

Fig. 5 zeigt einen Decoder in Form eines Blockschaltbilds. Am Eingang 40 liegt beispielsweise die Y-Komponente der datenreduziert übertragenen oder aufgezeichneten Farbfernsehsignale an. Der Decoder enthält acht Look-Up-Schaltungen. Diese können aus PROM-Schaltungen (Programmable Read Only Memory) bestehen. Die Eingangsdaten werden als Adresse zugeführt, die Ausgangsdaten als gespeicherte Zahlenwerte an diesen Adressen ausgelesen.
In der ersten Look-Up-Schaltung 401 wird der am Ausgang von Codierschaltung 28 hinzuaddierte Wert von eins wieder subtrahiert. Statt eines Wertebereichs, der 0 und 255 nicht enthält, wird damit wieder ein Wertebereich von z.B. 0...253 hergestellt. Jeweils sieben Bit aus den Feldern 41 bis 48 werden einer zweiten Look-Up-Schaltung 462 und einer zweiten Verzögerungsschaltung 422, die eine Verzögerung um ca. zehn Takte bewirkt, zugeführt. Die acht seriell ankommenden Bits aus den Feldern 491, 492 und 493 werden in einem Seriell-Parallel-Umsetzer 41 in parallele Datenworte zu je acht Bit gewandelt und in einer ersten Verzögerungsschaltung 421 um ca. drei Takte verzögert.
In der zweiten Look-Up-Schaltung 462 werden aus den jeweils sieben Bit zwei quantisierte Bildpunkt-Differenzwerte Dqi, Dqi+1 mit jeweils vier Bit Wortbreite und elf möglichen Stufen S0,...,S10 gewonnen, wobei jeweils der größere der beiden quantisierten Bildpunkt-Differenzwerte an einem ersten Ausgang zur Verfügung steht und der jeweils kleinere der beiden Bildpunkt-Differenzwerte an einem zweiten Ausgang. In einer nachfolgenden Detektor-Schaltung 44 wird jeweils der größte und der kleinste quantisierte Bildpunkt-Differenzwert des jeweiligen Blocks ermittelt und an einem ersten Ausgang der maximale Bildpunkt-Differenzwert einem ersten
Zwischenspeicher 451 zugeführt und an einem zweiten Ausgang der kleinste Bildpunkt-Differenzwert einem zweiten Zwischenspeicher 452. Die Zwischenspeicherung erfolgt jeweils für die Verarbeitung eines Blocks.
Der kleinste quantisierte Bildpunkt-Differenzwert, d.h. die kleinste Stufe, wird in einem Subtrahierer 47 von dem größten quantisierten Bildpunkt-Differenzwert, d.h. der größten Stufe, abgezogen. Daraus ergibt sich ein Differenzwert, der die Anzahl der besetzten Stufen des Blocks darstellt und ein Maß für den Aktivitätsbereich im Block ist.
Einer dritten Look-Up-Schaltung 463 werden dieser Differenzwert und die Bits aus den Feldern 491, 492 und 493 zugeführt. Diese Look-Up-Schaltung ermittelt daraus die rückquantisierte Aktivität des jeweiligen 4*4-Blocks.
Der die Anzahl der besetzten Stufen darstellende Differenzwert und der quantisierte kleinste Bildpunkt-Differenzwert werden einer vierten Look-Up-Schaltung 464 zugeführt. In dieser Look-Up-Schaltung wird eine Größe zur Errechnung des Original-Minimums M ermittelt.
In einer fünften Look-Up-Schaltung 465 wird der quantisierte kleinste Bildpunkt-Differenzwert, d.h. die kleinste besetzte Stufe, vom Ausgangssignal der zweiten Verzögerungsschaltung 422, d.h. von den übertragenen bzw. aufgezeichneten Stufen, subtrahiert und damit die ursprüngliche Stufen-Nummer wiederhergestellt mit der kleinsten Stufe S0 in jedem Block. Das Ausgangssignal stellt jeweils mit 4 Bit Wortbreite die beiden ursprünglichen Stufen-Nummern des quantisierten Bildpunkt-Differenzwertpaars Dqi, Dqi+1 dar.
Dieses Bildpunkt-Differenzwertpaar wird einer sechsten 466 und einer siebten 467 Look-Up-Schaltung zusammen mit dem Ausgangssignal der dritten Look-Up-Schaltung 463 zugeführt. In diesen beiden Look-Up-Schaltungen wird die im Coder durchgeführte Quantisierung der Bildpunkt-Differenzwerte rückgängig gemacht.
Einer achten Look-Up-Schaltung 468 werden die acht Bits aus den Feldern 491, 492 und 493 und das Ausgangssignal der vierten Look-Up-Schaltung 464 zugeführt. Aus diesen beiden Signalen wird das Original-Minimum M wieder ermittelt und in einem ersten Addierer 471 und in einem zweiten Addierer 472 zu den rückquantisierten Bildpunkt-Differenzwerten addiert. An den Ausgängen 481 und 482 stehen dann jeweils wieder zwei der insgesamt sechzehn Bildpunkt-Werte des Blocks zur Verfügung.
Entsprechend werden die Bildpunkt-Werte von 4*4-Blöcken der U- und der V-Komponente decodiert.

Bei anderen Zeilenzahlen (525 Zeilen), Bildwechselfrequenzen (59.94 oder 60 Hz) oder Bildformaten können die relevanten Zahlenwerte und Anordnungen entsprechend dem in der Erfindung aufgezeigten Lösungsweg angepaßt werden.

Die Arbeitsweise der Codierschaltung 28 in Fig. 2 wird mit dem folgenden FORTRAN-Programm für einen Rechner vom Typ VAX 8550 beschrieben:

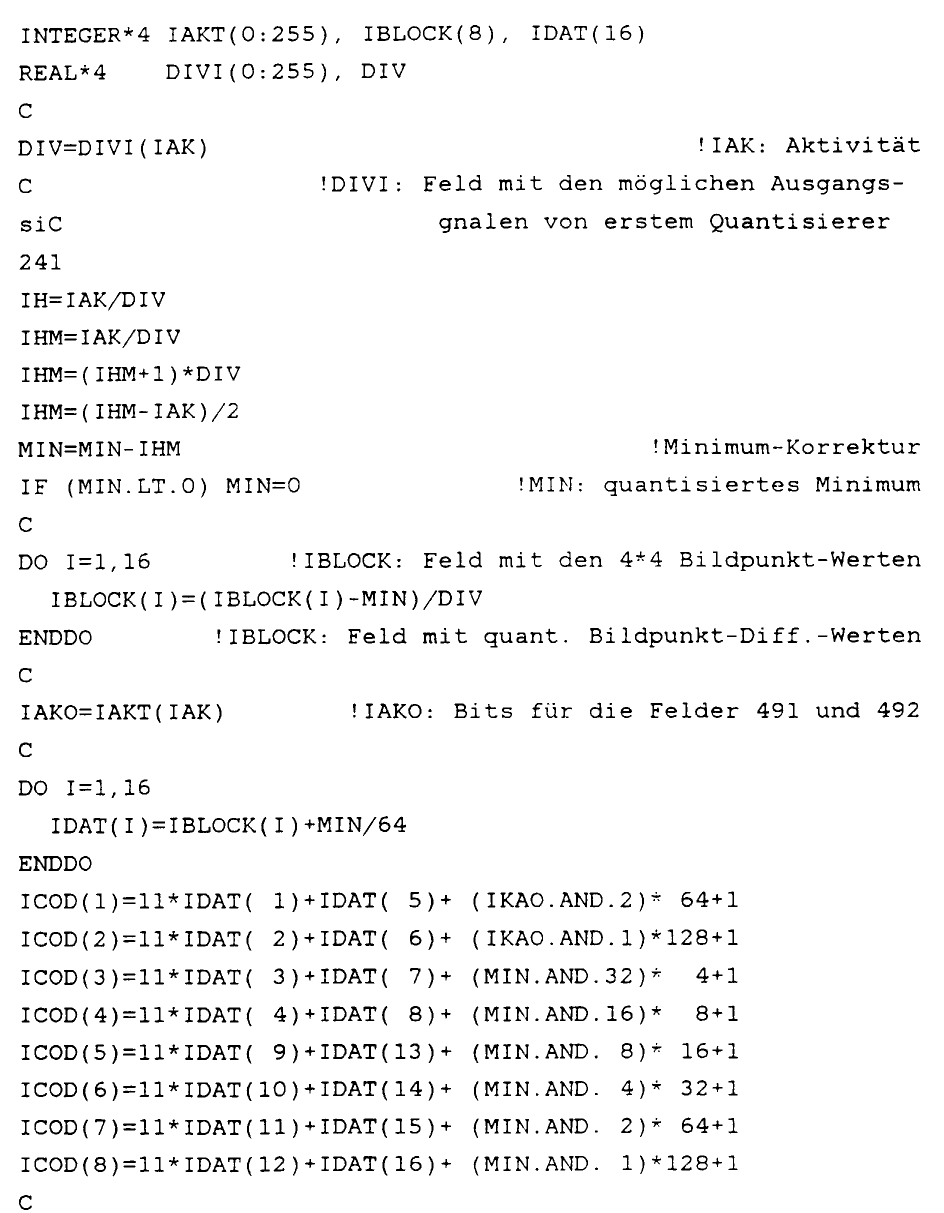

Dabei sind ICOD(1)...ICOD(8) die Bytes aus den Feldern 41...48 mit dem jeweils dazugehörigen Bit der Felder 491, 492 und 493. Der vierte Summand im Wert von 1 dient zur Unterdrückung der Werte 0 und 255.

Der dritte Summand von ICOD(1) und ICOD(2) ist das Bit aus den Feldern 491 bzw. 492.
IAKT und DIVI sind Felder im Rechner für den Wertebereich 0...255, aus denen in Abhängigkeit von der Aktivität ein Quantisierungsfaktor und die beiden Bits für die Felder 491 und 492 gewonnen werden. Der Inhalt dieser Felder wird nach folgender Vorschrift gewonnen:
L=1
ICW=10
DIV=255.5/11.
IDIV=DIV*2+0.99
DIV=IDIV/2.
DO I=255,0,-1
IWE=(I)/DIV
IF (IWE.LT.ICW) THEN
DIV=(FLOAT(I)+0.5)/FLOAT(ICW+1)
IDIV=DIV*2+0.99
DIV=IDIV/2.
IF (DIV.LT.1.) DIV=1.
L=L+1
IF (L.GT.4) THEN
ICW=ICW-1
DIV=(FLOAT(I)+0.5)/FLOAT(ICW+1)
IDIV=DIV*2+0.99
DIV=IDIV/2.
IF (DIV.LT.1.) DIV=1.
L=1
ENDIF
ENDIF
IWE=(I)/DIV
IAKT(I)=L-1
DIVI(I)=DIV
ENDDO.

## Patentansprüche

1. Verfahren zur digitalen Übertragung und/oder Aufzeichnung von komponentencodierten Farbfernsehsignalen, die zeilenorientiert sind, bei dem für einen Übergang von einem ersten Bild-Seiten-Verhältnis zu einem zweiten Bild-Seiten-Verhältnis zumindest ein Teil einer zusätzlich benötigten Übertragungs- und/oder Aufzeichnungskapazität für die Codierung der zusätzlich entstehenden Fläche von Bildern mit dem zweiten Bild-Seiten-Verhältnis durch Unterabtastung von Komponenten gewonnen wird, **dadurch gekennzeichnet**, daß die Übertragung bzw. Aufzeichnung des codierten Farbfernsehsignals im zweiten Bild-Seiten-Verhältnis über eine Übertragungsstrecke bzw. mit einer Einrichtung erfolgt, die für das erste Bild-Seiten-Verhältnis vorgesehen ist, wobei nur eine vertikale Unterabtastung einer oder mehrerer Chrominanzkomponenten durchgeführt wird und in den Zeilen oder Zeilenabschnitten (Fig. 3a), die normalerweise die Chrominanzkomponente/n enthalten, aus der Luminanz- und/oder Chrominanzkomponente gewonnene Daten anstelle der ursprünglichen Chrominanzdaten angeordnet werden.

2. Verfahren nach Anspruch 1, **dadurch gekennzeichnet**, daß innerhalb von Zeilenpaaren (Fig. 3a und 3b) jeweils in einem ersten Abschnitt (Y) der beiden Zeilen Luminanzdaten angeordnet sind und in einem zweiten Abschnitt (U) der ersten der beiden Zeilen Daten einer ersten Chrominanzkomponente und in einem zweiten Abschnitt (V) der zweiten der beiden Zeilen Daten einer zweiten Chrominanzkomponente.

3. Verfahren nach Anspruch 1 oder 2, **dadurch gekennzeichnet**, daß das Farbfernsehsignal codiert ist mittels einer Blockkompandierung, bei der für jeden Block zunächst ein maximaler und ein minimaler (M) Bildpunktwert und aus der Differenz (251) dieser beiden eine Aktivität (A) ermittelt wird und von jedem der Bildpunktwerte (Xi) des Blocks ein vom minimalen Bildpunktwert (M) abgeleiteter Wert subtrahiert (252) und mit reduzierter Wortbreite zusammen mit einer Information über die Aktivität und den vom minimalen Bildpunktwert (M) abgeleiteten Wert übertragen und/oder aufgezeichnet wird und wobei:
- die Aktivität (A) wird mit einer ungleichförmigen Kennlinie und einer festgelegten Zahl von Stufen (S0-S10) quantisiert (241; Aq) und es werden für jede Stufe ein oder mehrere Repräsentativwerte (Ari) gebildet;
- der minimale Bildpunktwert (M) wird, gesteuert durch die Stufen-Nummer, quantisiert (242; Mq);
- das quantisierte Minimum (Mq) wird von jedem der Bildpunkt-werte (Xi) subtrahiert (252; Di);
- die Bildpunkt-Differenzwerte (Di) werden gesteuert durch die Stufen-Nummer quantisiert (243; quantisierte Bildpunkt-Differenzwerte Dqi);
- die quantisierte Aktivität (Aq) wird unter Verwendung der Differenz zwischen der größten und der kleinsten Stufen-Nummer codiert (28),
wobei bei einer Decodierung entsprechend invers verfahren wird.

4. Verfahren nach einem oder mehreren der Ansprüche 1 bis 3, **dadurch gekennzeichnet**, daß das übertragene bzw. aufgezeichnete Farbfernsehsignal im zweiten Bild-Seiten-Verhältnis ein Vollbild-Signal ist oder ein Halbbild-Signal mit verdoppelter Zeilenzahl, wobei zur Codierung bzw. Decodierung dieses Farbfernsehsignals zusätzlich eine Blockkompandierung verwendet wird, die die Eingangs-Datenrate um einen Faktor kleiner drei - insbesondere zwei - reduziert.

5. Verfahren nach einem oder mehreren der Ansprüche 1, 2 oder 4, **dadurch gekennzeichnet**, daß die Übertragungsstrecke bzw. Einrichtung für das erste Bild-Seiten-Verhältnis folgende Kennwerte enthält:
625 Zeilen, 50 Hz Bildwechselfrequenz, Halbbilder, 4:3-Bildformat,
und daß das Farbfernsehsignal im zweiten Bild-Seiten-Verhältnis folgende Kennwerte enthält:
625 Zeilen, 50 Hz Bildwechselfrequenz, Vollbilder, 16:9-Bildformat,
oder folgende Kennwerte:
1250 oder 1249 Zeilen, 50 Hz Bildwechselfrequenz, Halbbilder, 16:9-Bildformat.

6. Verfahren nach einem oder mehreren der Ansprüche 1, 2, 4 oder 5, **dadurch gekennzeichnet**, daß die Einrichtung zur Aufzeichnung eines Farbfernsehsignals im zweiten Bild-Seiten-Verhältnis nach dem D1-Verfahren arbeitet und insbesondere ein digitaler Studio-Videorecorder ist.

7. Verfahren nach einem oder mehreren der Ansprüche 3 bis 6, **dadurch gekennzeichnet**, daß coderseitig für jeden Block die größten, nicht besetzten Stufennummern ermittelt werden und das quantisierte Minimum (Mq) durch die Addition einer der Anzahl der nicht umfaßten Stufennummern entsprechenden Zahl zu den Stufen-Nummern codiert (28) wird und daß decoderseitig anhand der minimalen besetzten Stufen-Nummer das quantisierte Minimum (Mq) entsprechend decodiert (465) wird.

8. Verfahren nach einem oder mehreren der Ansprüche 3 bis 7, **dadurch gekennzeichnet**, daß für jeden Block mit 2*N Ein-Byte-Bildpunkt-Werten der Luminanz-, der ersten oder der zweiten Chrominanz-Komponente die quantisierte Aktivität (Aq), das quantisierte Minimum (Mq) und die quantisierten Bildpunkt-Differenzwerte (Dqi) in einem Block mit N Byte codiert werden, wobei N größer/gleich acht ist.

9. Verfahren nach Anspruch 8, **dadurch gekennzeichnet**, daß innerhalb jedes Blocks für die Codierung der quantisierten Aktivität (Aq) zwei Bit und für die Codierung des quantisierten Minimums (Mq) sechs Bit und für die Codierung jeweils eines Bildpunkt-Differenzwertpaars (Dqi, Dqi+1) sieben Bit verwendet werden.

10. Verfahren nach einem oder mehreren der Ansprüche 3 bis 9, **dadurch gekennzeichnet**, daß coderseitig zu den Worten der Blökke vor der Übertragung und/oder Aufzeichnung jeweils der Wert eins addiert wird und der Betrag der Worte auf den zweitgrößten möglichen begrenzt wird und decoderseitig der Wert eins entsprechend subtrahiert (401) wird.

11. Verfahren nach einem oder mehreren der Ansprüche 3 bis 10, **dadurch gekennzeichnet**, daß in Blöcken mit kleineren quantisierten Aktivitäten (Aq) Zusatzdaten coderseitig eingefügt und decoderseitig entsprechend entnommen werden.

12. Coder für ein Verfahren nach einem oder mehreren der Ansprüche 3 bis 11, versehen mit einem Maximumbildner (231), mit einem Minimumbildner (232), mit einem ersten Subtrahierer (251), der die Ausgangssignale des Minimumbildners von den Ausgangssignalen des Maximumbildners abzieht, mit einem dem ersten Subtrahierer nachgeschalteten ersten Quantisierer (241) mit ungleichförmiger Kennlinie, der zusätzlich die entsprechenden Stufen-Nummern (S0-S10) ausgibt, mit einem von dem ersten Quantisierer gesteuerten zweiten Quantisierer (242) für die Ausgangssignale des Minimumbildners, mit einem zweiten Subtrahierer (252), der die Ausgangssignale des zweiten Quantisierers von Bildpunkt-Werten abzieht, mit einem von dem ersten Quantisierer gesteuerten dritten Quantisierer (243) für die Ausgangssignale des zweiten Subtrahierers und mit einer Codierschaltung (28), die die Ausgangssignale des ersten, zweiten und dritten Quantisierers zu einem Block entsprechend Ansprüchen 7, 8 und/oder 9 formt.

13. Decoder für ein Verfahren nach einem oder mehreren der Ansprüche 3 bis 11, versehen mit einer Einrichtung zur Ermittlung der maximalen und der minimalen Stufen-Nummer der quantisierten Bildpunkt-Differenzwerte (462, 44, 451, 452), mit Mitteln zur Auswertung einer Differenzzahl zwischen diesen Stufen-Nummern (463, 464), mit Mitteln zur Auswertung der minimalen Stufen-Nummer (465), mit Mitteln zur Rück-Quantisierung (468, 466, 467) von quantisierter Aktivität (Aq), quantisiertem Minimum (Mq) und quantisierten Bildpunkt-Differenzwerten (Dq, Dq+1), und mit Addierern (471, 472), die das Minimum und die Bildpunkt-Differenzwerte summieren.

## Claims

1. A process for the digital transmission and/or recording of component-coded colour television signals which are line-oriented, where for a transition from a first aspect ratio to a second aspect ratio at least a part of an additionally required transmission and/or recording capacity for the coding of the additionally occurring area of pictures with the second aspect ratio is obtained by sub-sampling of components, characterised in that the transmission and/or recording of the coded colour television signal in the second aspect ratio takes place via a transmission link or using a device which is provided for the first aspect ratio, where only a vertical sub-sampling of one or more chrominance components is carried out and data obtained from the luminance- and/or chrominance component are arranged in place of the original chrominance data in the lines or line sections (Fig. 3a) which normally contain the chrominance component(s).

2. A process as claimed in Claim 1, characterised in that within line pairs (Fig. 3a and 3b) in each case luminance data are arranged in a first section (Y) of the two lines and data of a first chrominance component are arranged in a second section (U) of the first of the two lines and data of a second chrominance component are arranged in a second section (V) of the second of the two lines.

3. A process as claimed in Claim 1 or 2, characterised in that the colour television signal is coded by a block companding where for each block initially one maximum and one minimum (M) picture element value is determined and from the difference (251) between these two values an activity (A) is determined and from each of the picture element values (Xi) of the block a value derived from the minimum picture element value (M) is subtracted (252) and is transmitted and/or recorded with reduced word breadth together with an item of information relating to the activity and the value derived from the minimum picture element value (M) and where:
- the activity (A) is quantised (241; Aq) with a non-uniform characteristic and with a defined number of stages (S0-S10) and one or more representative values (Ari) are formed for each stage;
- the minimum picture element value (M) is quantised (242; Mq) controlled by the stage number;
- the quantised minimum (Mq) is subtracted (252; Di) from each of the picture element values (Xi);
- the picture element difference values (Di) are quantised (243; quantised picture element difference values Dqi) controlled by the stage number;
- the quantised activity (Aq) is coded (28) using the difference between the largest and the smallest stage number,
where a corresponding inverse procedure is followed for decoding.

4. A process as claimed in one or more of Claims 1 to 3, characterised in that the transmitted and/or recorded colour television signal in the second aspect ratio is a frame signal or a field signal with double the number of lines, where for the coding and decoding of this colour television signal a block companding, which reduces the input data rate by a factor of less than three - in particular two - is additionally employed.

5. A process as claimed in one or more of Claims 1, 2 or 4, characterised in that the transmission link or the device for the first aspect ratio has the following characteristic values: 625 lines, 50 Hz picture-change frequency, fields, 4:3 picture format,
and that the colour television signal in the second aspect ratio has the following characteristic values: 625 lines, 50 Hz picture-change frequency, frames, 16:9 picture format or has the following characteristic values: 1250 or 1249 lines, 50 Hz picture-change frequency, fields, 16:9 picture format.

6. A process as claimed in one or more of Claims 1 ,2, 4 or 5, characterised in that the device for recording a colour television signal in the second aspect ratio operates in accordance with the D1 method and in particular is a digital studio video recorder.

7. A process as claimed in one or more of Claims 3 to 6, characterised in that at the coder end for each block the largest non-allocated stage numbers are determined and the quantised minimum (Mq) is coded (28) by adding a number corresponding to the number of non-included stage numbers to the stage numbers, and that at the decoder end the quantised minimum (Mq) is decoded (465) in a corresponding fashion on the basis of the minimum allocated stage number.

8. A process as claimed in one or more of Claims 3 to 7, characterised in that for each block with 2*N one-byte picture element values of the luminance component, of the first chrominance component or of the second chrominance component, the quantised activity (Aq), the quantised minimum (Mq) and the quantised picture element difference values (Dqi) are coded in a block containing N bytes, where N is greater than / equal to eight.

9. A process as claimed in Claim 8, characterised in that within each block two bits are used for the coding of the quantised activity (Aq), six bits are used for the coding of the quantised minimum (Mq) and seven bits are used for the coding in each case of a pair of picture element difference values (Dqi, Dqi+1).

10. A process as claimed in one or more of Claims 3 to 9, characterised in that at the coder end the value one is in each case added to the words of the blocks prior to the transmission and/or recording and the amount of the words is limited to the second largest possible, and at the decoder end the value one is subtracted (401) in a corresponding fashion.

11. A process as claimed in one or more of Claims 3 to 10, characterised in that in blocks with smaller quantised activities (Aq) additional data items are inserted at the coder end and removed in a corresponding fashion at the decoder end.

12. A coder for a process as claimed in one or more of Claims 3 to 11, provided with a maximum-forming device (231), with a minimum-forming device (232), with a first subtracter (251) which subtracts the output signals of the minimum-forming device from the output signals of the maximum-forming device, with a first quantiser (241) with a non-uniform characteristic which is connected following the first subtracter and which additionally emits the corresponding stage numbers (S0-S10), with a second quantiser (242), controlled by the first quantiser, for the output signals of the minimum-forming device, with a second subtracter (252) which subtracts the output signals of the second quantiser from picture element values, with a third quantiser (243), controlled by the first quantiser, for the output signals of the second subtracter, and with a coder circuit (28) which forms the output signals of the first, second and third quantisers into a block in accordance with Claims 7, 8 and/or 9.

13. A decoder for a process as claimed in one or more of Claims 3 to 11, provided with a device for determining the maximum and the minimum stage number of the quantised picture element difference values (462, 44, 451, 452), with means for analysing a difference number between these stage numbers (463, 464), with means for analysing the minimum stage number (465), with means for the de-quantisation (468, 466, 467) of quantised activity (Aq), quantised minimum (Mq) and quantised picture element difference values (Dq, Dq+1), and with adders (471, 472) which add the minimum and the picture element difference values.

## Revendications

1. Procédé pour la transmission et/ou l'enregistrement numériques de signaux de télévision couleur à composantes codées, qui sont orientés par lignes, où au moins une partie d'une capacité de transmission et/ou d'enregistrement supplémentaire nécessaire, lors du passage d'un premier format d'image à un second format d'image, pour le codage des surfaces supplémentaires des images dudit second format, est obtenue par sous-balayage de composantes, **procédé caractérisé en ce que** la transmission ou l'enregistrement du signal de télévision couleur codé sont assurés par l'intermédiaire d'une ligne de transmission ou d'un dispositif prévus pour ledit premier format d'image, sachant qu'un seul sous-balayage vertical d'une ou de plusieurs composante(s) de chrominance est effectué et que des données obtenues à partir de la composante de luminance et/ou de chrominance sont disposées à la place des données de chrominance initiales dans les lignes ou tronçons de lignes (fig. 3a) qui contiennent normalement la (les) composante(s) de chrominance.

2. Procédé selon la revendication 1 **caractérisé en ce qu**'à l'intérieur de paires de lignes (fig. 3a et 3b), des données de luminance sont disposées dans un premier tronçon (Y) des deux lignes, tandis que des données d'une première composante de chrominance sont placées dans un second tronçon (U) de la première des deux lignes et des données d'une seconde composante de chrominance dans un second tronçon (V) de la seconde des deux lignes.

3. Procédé selon l'une quelconque des revendications 1 ou 2 **caractérisé en ce que** le signal de télévision couleur est codé à l'aide d'une compression-expansion de blocs, où une valeur de point d'image maximale et minimale (M) est d'abord déterminée pour chaque bloc avant de définir une activité (A) à partir de la différence (251) de ces deux valeurs, tandis qu'une valeur (252) déduite de la valeur de point d'image minimale (M) est soustraite de chacune des valeurs de point d'image (Xi) du bloc, qui est ensuite transmise et/ou enregistrée avec une largeur de mot réduite et accompagnée d'une information concernant l'activité (A) et la valeur déduite de la valeur de point d'image minimale (M), sachant que :
- l'activité (A) est quantifiée (241 ; Aq) en utilisant une caractéristique variable et un nombre défini de niveaux (S0-S10), puis une ou plusieurs valeur(s) représentative(s) (Ari) sont déterminées pour chaque niveau ;
- la valeur de point d'image minimale (M) est quantifiée (242 ; Mq) en fonction du numéro de niveau ;
- le minimum quantifié (Mq) est soustrait (252 ; Di) de chacune des valeurs de points d'image (Xi) ;
- les valeurs différentielles de points d'image (Di) sont quantifiées (243 ; valeurs différentielles quantifiées des points d'image Dqi) en fonction du numéro de niveau ;
- l'activité quantifiée (Aq) est codée (28) à l'aide de la différence entre le plus grand et le plus petit numéro de niveau,
le décodage étant réalisé de façon analogue dans le sens inverse.

4. Procédé selon l'une quelconque ou plusieurs des revendications 1 à 3 **caractérisé en ce que** le signal de télévision couleur transmis ou enregistré sous le second format d'image, est un signal d'image ou un signal de trame à double nombre de lignes, sachant que le codage ou décodage de ce signal de télévision couleur est réalisé à l'aide d'une compression-expansion de blocs complémentaire qui permet de réduire le débit de données d'entrée par un facteur inférieur à trois - et notamment un facteur de deux.

5. Procédé selon l'une quelconque ou plusieurs des revendications 1, 2 ou 4 **caractérisé en ce que** ladite ligne de transmission ou ledit dispositif destinés au premier format d'image, possède les caractéristiques suivantes :
625 lignes, fréquence d'image 50 Hz, trames, format d'image 4/3,
et que le signal de télévision couleur du second format d'image possède soit les caractéristiques suivantes :
625 lignes, fréquence d'image 50 Hz, images complètes, format d'image 16/9, soit les caractéristiques ci-dessous :
1250 ou 1249 lignes, fréquence d'image 50 Hz, trames, format d'image 16/9.

6. Procédé selon l'une quelconque ou plusieurs des revendications 1, 2, 4 ou 5 **caractérisé en ce que** le dispositif pour l'enregistrement d'un signal TV couleur du second format d'image, fonctionne selon le principe D1, et qu'il s'agit notamment d'un magnétoscope numérique de studio.

7. Procédé selon l'une quelconque ou plusieurs des revendications 3 à 6 **caractérisé en ce que** les plus grands des numéros de niveaux inoccupés sont déterminés au niveau du codeur, et que le minimum quantifié (Mq) est codé (28) en additionnant aux numéros de niveaux, un nombre qui est équivalent au nombre de numéros de niveaux inoccupés, et caractérisé en outre en ce que, au niveau du décodeur, le minimum quantifié (Mq) est décodé (465) à l'aide du plus petit des numéros de niveaux occupés.

8. Procédé selon l'une quelconque ou plusieurs des revendications 3 à 7 **caractérisé en ce que**, pour chaque bloc contenant 2*N valeurs de points d'image à un octet de la composante de luminance et des première et seconde composantes de chrominance, l'activité quantifiée (Aq), le minimum quantifié (Mq) et les valeurs différentielles quantifiées des points d'image (Dqi) sont codés dans un bloc de N octets, où N est supérieur ou égal à huit.

9. Procédé selon la revendication 8 **caractérisé en ce que**, à l'intérieur de chaque bloc, deux bits sont utilisés pour le codage de l'activité quantifiée (Aq), six bits pour le codage du minimum quantifié (Mq) et sept bits pour le codage de chacune des paires de valeurs différentielles de points d'image (Dqi, Dqi+1).

10. Procédé selon l'une quelconque ou plusieurs des revendications 3 à 9 **caractérisé en ce que**, au niveau du codeur, la valeur un est additionnée aux mots des blocs avant la transmission et/ou l'enregistrement, le montant des mots étant limité au montant ayant la seconde grandeur possible, et que, au niveau du décodeur, cette valeur un est soustraite (401) en conséquence.

11. Procédé selon l'une quelconque ou plusieurs des revendications 3 à 10 **caractérisé en ce que**, au niveau du codeur, des données additionnelles sont ajoutées aux blocs de moindre activité quantifiée (Aq), et que ces données additionnelles sont prélevées au niveau du décodeur.

12. Codeur pour un procédé selon l'une quelconque ou plusieurs des revendications 3 à 11 intégrant un détecteur de maximum (231), un formateur de minimum (232), un premier soustracteur (251) qui soustrait les signaux de sortie du formateur de minimum des signaux de sortie du détecteur de maximum, intégrant également un premier quantificateur (241) à caractéristique variable disposé en aval dudit premier soustracteur et fournissant, en plus, les numéros de niveaux correspondants (S0-S10), un second quantificateur (242), commandé par ledit premier quantificateur, pour les signaux de sortie du formateur de minimum, un second soustracteur (252) qui soustrait les signaux de sortie du second quantificateur des valeurs de points d'image, et intégrant en outre un troisième quantificateur(243), commandé par ledit premier quantificateur, pour les signaux de sortie dudit second soustracteur, ainsi qu'un circuit de codage (28) qui regroupe les signaux de sortie des premier, second et troisième quantificateurs pour former un bloc conformément aux revendications 7, 8 et/ou 9.

13. Décodeur pour un procédé selon l'une quelconque ou plusieurs des revendications 3 à 11 intégrant un dispositif pour déterminer les numéros de niveaux maximal et minimal des valeurs différentielles quantifiées des points d'image (462, 44, 451, 452), des moyens pour déterminer un nombre différentiel desdits numéros de niveaux (463, 464), des moyens pour analyser les numéros de niveaux minimaux(465), des moyens pour annuler la quantification (468, 466, 467) de l'activité quantifiée (Aq), le minimum quantifié (Mq) et des valeurs différentielles quantifiées des points d'image (Dq, Dq+1), et intégrant enfin des additionneurs (471, 472) qui totalisent le minimum et les valeurs différentielles des points d'image.
